(19) Europäisches Patentamt
European Patent Office
Office européen des brevets

(11) **EP 4 575 888 A1**

(12) **EUROPEAN PATENT APPLICATION**

(43) Date of publication:
25.06.2025 Bulletin 2025/26

(21) Application number: 23307375.8

(22) Date of filing: 22.12.2023

(51) International Patent Classification (IPC):
*G06K 7/00* (2006.01)     *G06K 19/07* (2006.01)

(52) Cooperative Patent Classification (CPC):
G06K 19/07; G06K 7/0013

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: IDEMIA France
92400 Courbevoie (FR)

(72) Inventors:
• BOLKIAH, Suhaily Hassanal
92400 Courbevoie (FR)
• FAHMI, Fahmi
92400 COURBEVOIE (FR)

(74) Representative: Regimbeau
20, rue de Chazelles
75847 Paris Cedex 17 (FR)

(54) **INTEGRATED CIRCUIT CARD ABLE TO BOOT IN A USER MODE AND IN A MAINTENANCE MODE**

(57)     An integrated circuit card (1) comprising: an electrical interface (10) for communicating with a reader (2) and including a reset contact (RST) and an input/output contact (I/O); a boot manager (16) configured to: detect a reset sequence implemented by the reader (2) while the reader (2) is connected to electrical interface (10), whenever the detected reset sequence is a user reset sequence cause the integrated circuit card (1) to boot in a user mode wherein the integrated circuit card (1) is responsive to a set of user commands, and whenever the detected reset sequence is a maintenance reset sequence, cause the integrated circuit to boot in a maintenance mode wherein the integrated circuit card (1) is responsive to a set of maintenance commands only, the set of maintenance commands being more restricted than the set of user commands.

FIG. 1

## Description

## TECHNICAL FIELD

The present disclosure relates to integrated circuit cards.

## BACKGROUND

Integrated circuit cards, especially cards compliant with the ISO7816-3 standard, may be subject to various issues (tearing, security breaches, etc.). In the present disclosure, terms "ISO7816-3" or "ISO7816-3 standard" refers to the standard "ISO/IEC 7816-3 Novembre 2006".

When an issue occurs in an integrated circuit card, an analysis may be performed in order to find out what happened in the faulty card. For that purpose, the memory of the card may be dumped.

However, this procedure is long, and dumping the memory dump may not provide sufficient information to understand what happened in the fault card.

## SUMMARY

A goal of the present disclosure is to allow easy diagnosis of an integrated circuit card.

This goal is achieved by an integrated circuit card comprising:

- an electrical interface for communicating with a reader, wherein the electrical interface includes a reset contact and an input/output contact;
- a boot manager configured to:

  ○ detect a reset sequence implemented by the reader while the reader is connected to electrical interface,
  ○ whenever the detected reset sequence is a user reset sequence, cause the integrated circuit card to boot in a user mode wherein the integrated circuit card is responsive to a set of user commands;
  ○ whenever the detected reset sequence is a maintenance reset sequence, cause the integrated circuit to boot in a maintenance mode wherein the integrated circuit card is responsive to a set of maintenance commands only, the set of maintenance commands being more restricted than the set of user commands;

wherein the maintenance reset sequence comprises:

- causing a reset signal carried by the reset contact to have a rising edge at a reset time,
- sending a predefined word to the integrated circuit card via the input/output contact within a predefined period after the reset time; and

wherein the user reset sequence does not comprise sending the predefined word, and comprises:

- causing the reset signal to have a rising edge at the reset time,
- causing a signal carried by the input/output contact to have a falling edge at a subsequent time included in the predefined period after the reset time, and
- waiting for an answer from the integrated circuit card via the input/output contact after the subsequent time.

The integrated circuit card may further comprise optional features which are detailed below, taken alone or combined whenever possible.

Preferably, the predefined period goes from 400 clock cycles after the reset time to 40000 clock cycles after the reset time.

Preferably, the predefined word is coded on a single byte and/or has a hexadecimal value of A5.

Preferably:

- the electrical interface comprises a clock contact, and
- the user reset sequence comprises causing a clock signal carried by the clock contact to have a rising edge at a clock starting time before the reset time.

Preferably, a delay from the clock starting time to the reset time is greater or equal to 400 clock cycles.

Preferably, the user reset sequence comprises causing an input/output signal carried by the input/output electric contact to have a rising edge at a time between the clock starting time and the reset time.

Preferably, a delay $t_a$ from the clock starting time to the time of the rising edge of the input/output signal is lower or equal to 200 clock cycles.

Preferably:

- the electrical interface includes a power contact for supplying the integrated circuit card with power, and
- the user reset sequence comprises causing a power signal carried by the power contact to have a rising edge before the clock starting time.

Preferably:

- the set of maintenance commands do not comprise any command modifying contents of the integrated circuit card, and
- the set of user commands comprises at least one commands modifying contents of the integrated circuit card.

Preferably the set of maintenance commands include commands requesting a status of the integrated circuit card, wherein the status comprises at least one of the following data:

- data describing tearing events detected by the integrated circuit card,
- data describing memory 12 leaks in a memory 12 of the integrated circuit card,
- data describing security violations detected by the integrated circuit card, and
- data describing a level of endurance of a memory 12 of the integrated circuit card.

Preferably:

- booting in the user mode comprises starting a user operating system comprising code instructions for processing the set of user commands,
- booting in the maintenance mode comprises starting a maintenance operating system comprising code instructions for processing the set of maintenance commands, wherein the maintenance operating system is different from the user operating system.

Another object of the present disclosure is a reader comprising:

- an electrical interface for communicating with an integrated circuit card, wherein the electrical interface comprises a reset contact and an input/output contact;
- a controller configured to implement:

  ◦ a user reset sequence causing the integrated circuit card to boot in a user mode wherein the integrated circuit card is responsive to a set of user commands, and
  ◦ a maintenance reset sequence causing the integrated circuit card to boot in a maintenance mode wherein the integrated circuit card is responsive to a set of maintenance commands only, wherein the set of maintenance commands is more restricted than the set of user commands;

wherein the maintenance reset sequence comprises:

- causing a reset signal carried by the reset contact to have a rising edge at a reset time,
- sending a predefined word to the integrated circuit card via the input/output contact within a predefined period after the reset time; and

wherein the user reset sequence does not comprise sending the predefined word, and comprises:

- causing the reset signal to have a rising edge at the reset time,
- causing a signal carried by the input/output contact to have a falling edge at a subsequent time included in the predefined period after the reset time, and
- waiting for an answer from the integrated circuit card via the input/output contact after the subsequent time.

The reader may further comprise optional features which are detailed below, taken alone or combined whenever possible.

Preferably, the predefined period goes from 400 clock cycles after the reset time to 40000 clock cycles after the reset time.

Preferably, the predefined word is coded on a single byte and/or has a hexadecimal value of A5.

A further object of the present disclosure is a method implemented by an integrated circuit card, the method comprising:

- detecting a reset sequence implemented by a reader while the reader is connected to the integrated circuit card,
- whenever the detected reset sequence is a user reset sequence, causing the integrated circuit card to boot in a user mode wherein the integrated circuit card is responsive to a set of user commands less restricted than a set of maintenance commands;
- whenever the detected reset sequence is a maintenance reset sequence, causing the integrated circuit card to boot in a maintenance mode wherein the integrated circuit card is responsive to the set of maintenance commands only, wherein the set of maintenance commands is more restricted than the set of user commands,

wherein the maintenance reset sequence comprises:

- causing a reset signal carried by the reset contact to have a rising edge at a reset time,
- sending a predefined word to the integrated circuit card via the input/output contact within a predefined period after the reset time; and

wherein the user reset sequence does not comprise sending the predefined word, and comprises:

- causing the reset signal to have a rising edge at the reset time,
- causing a signal carried by the input/output contact to have a falling edge at a subsequent time included in the predefined period after the reset time, and
- waiting for an answer from the integrated circuit card via the input/output contact after the subsequent time.

BRIEF DESCRIPTION OF THE FIGURES

Further details, features and advantages are explained in more detail below with the aid of exemplary embodiments that are illustrated in the figures.

Figure 1 schematically depicts a system comprising an integrated circuit card and a reader according to an embodiment.

Figure 2 depicts electrical contacts of an integrated circuit card compliant with the ISO7816-3 standard.

Figure 3 shows a user reset sequence for causing an integrated circuit card to boot in a normal mode.

Figure 4 shows a user reset sequence for causing an integrated circuit card to boot in a maintenance mode.

Figure 5 shows steps of a method implemented by a integrated circuit card according to an embodiment.

DETAILED DESCRIPTION OF EMBODIMENTS

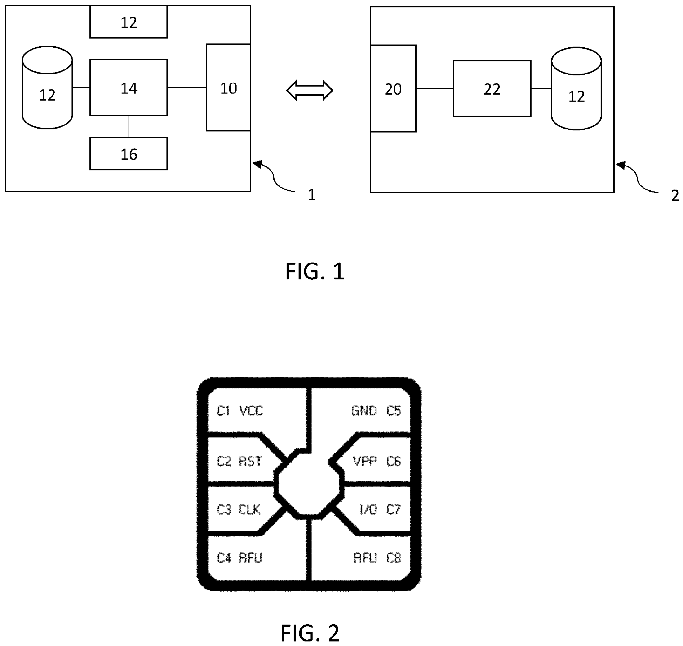

Referring to figures 1 and 2, a system comprises an integrated circuit card (ICC) 1 and a reader 2.

The ICC 1 comprises an electrical interface 10 for communicating with the reader 2.

The electrical interface 10 comprises electrical contacts, each of the electrical contacts being able to carry a digital signal. A digital signal can have two states: a low state and a high state. A transition from the low state to the high state is called a rising edge, whereas a transition from the high state to the low state is called a falling edge.

The electrical interface 10 comprises:

- a power contact for supplying the ICC 1 with power,
- a clock contact for carrying a clock signal,
- a reset contact,
- an input/output contact which providing a data communication channel between the ICC 1 and the reader 2. Within the scope of this disclosure, the expression "I/O line" should be read as equivalent to words or notion linked to "input / output contact" or "data communication channel between ICC1 and the reader 2 provided by the input / output contact".

In the ISO7816-3 standard, the power contact is designated VCC or C1, the clock contact is designated CLK or C3, the reset contact is designated RST or C2, and the input/output contact is designated I/O or C7.

The input/output contact I/O is bidirectional. Therefore, the ICC 1 can receive data sent by the reader 2 via the input/output contact I/O and send data to the reader 2 via the input/output contact I/O.

When the ICC 1 complies with the ISO7816-3 standard, the electrical contacts further comprise:

- a ground contact, designated GND or C5, providing an electrical ground,
- a VPP or C6 contact, dedicated to program EEPROM of first generation ICCs. On new generation cards this contact may be no longer used.

- two RFU contacts C4, C8, reserved for further use.

The ICC 1 further comprises a memory 12. The memory 12 stores two different computer programs: a user operating system (user OS) and a maintenance operating system (maintenance OS).

The memory 12 may for instance be an EEPROM memory 12.

The user OS comprises code instructions for processing a set of user commands issued by the reader 2 and transmitted to the ICC 1 via the input/output contact I/O. When the user OS is running, the ICC 1 is responsive to said user commands. At least one of the user commands may for instance request the ICC 1 to participate to known cryptographic methods. Typically, some of the user commands may modify the contents of the memory 12.

The user OS comprises further code instructions for writing log data in the memory 12. The log data provide information about events detected by the ICC 1 and considered to be abnormal.

The log data may comprise:

- data describing tearing events detected by the ICC 1,
- data describing memory 12 leaks in the memory 12 of the ICC 1,
- data describing security violations detected by the ICC 1, and
- data describing a level of endurance of the memory 12.

The maintenance OS is different from the user OS. The maintenance OS comprises code instructions for processing a set of maintenance command more restricted than the set of user commands.

The restricted character of the set of maintenance commands can be illustrated by the number of maintenance commands, which may be much lower than the number of user commands.

Alternately of additionally, the restricted character of the set of maintenance commands can be illustrated by the nature of the maintenance commands. Advantageously, the set of maintenance commands do not comprise any command modifying the contents of the memory 12.

The ICC 1 further comprises a processor 14 for executing either the user OS or the maintenance OS.

The ICC 1 further comprises a boot manager 16. A function played by a controller 22 (located in the reader 2) is to cause the integrated circuit to boot in a maintenance mode or in a user mode according to a method which will be described later. Booting in the maintenance mode comprises selectively starting the maintenance OS (the user OS is not started) whereas booting in the user mode comprises selectively starting the user OS (the maintenance OS is not started).

The boot manager 16 may be the processor 14, a component of the processor 14, or a circuit distinct from the processor 14 as shown in figure1. Boot manager may be also a specific module or function containing specific code instructions which when executed by the processor cause the management of the booting modes (make the integrated circuit to boot into maintenance mode or into user).

The reader 2 comprises as well an electrical interface 20 for communicating with the ICC 1.

The electrical interface 20 comprises electrical contacts. The electrical contacts are similar in number and in type to the electrical contacts of the ICC 1. Each electrical contact of the reader 2 is adapted to be electrically connected to a corresponding electrical contact of the ICC 1.

In particular, when the input/output contact I/O of the reader 2 contacts the input/output contact I/O of the ICC 1, both contacts form and allow the establishment of a communication channel between the reader 2 and the ICC 1.

When the reader 2 complies with the ISO7816-3 standard, the electrical contacts of the reader 2 are eight in number and meets all the requirements already described above in relation with the ICC 1.

The reader 2 may further comprise a slot for receiving at least in part the ICC 1. When the ICC 1 is received in the slot, the electrical contacts of the ICC 1 are in contact with the electrical contacts of the reader 2.

The reader 2 further comprises a controller 22. A function played by the controller 22 is to implement a user reset sequence or a maintenance reset sequence for resetting the ICC 1. Both sequences involve causing the electrical interface 20 (and therefore the electrical interface 10 when the ICC 1 is connected to the reader 2) to carry specific digital signals.

The maintenance reset sequence causes the ICC 1 to boot the maintenance OS. As a result of this sequence, the ICC is set in a maintenance mode wherein the ICC 1 is responsive to the set of maintenance commands only.

The user reset sequence causes the integrated circuit to boot the user OS. As a result of this sequence, the ICC 1 is set in a user mode wherein the ICC 1 is responsive to a set of user commands less restricted than the set of maintenance commands. In a user mode the set of user commands comprises at least one command one commands modifying contents of the integrated circuit card (1).

User reset sequence

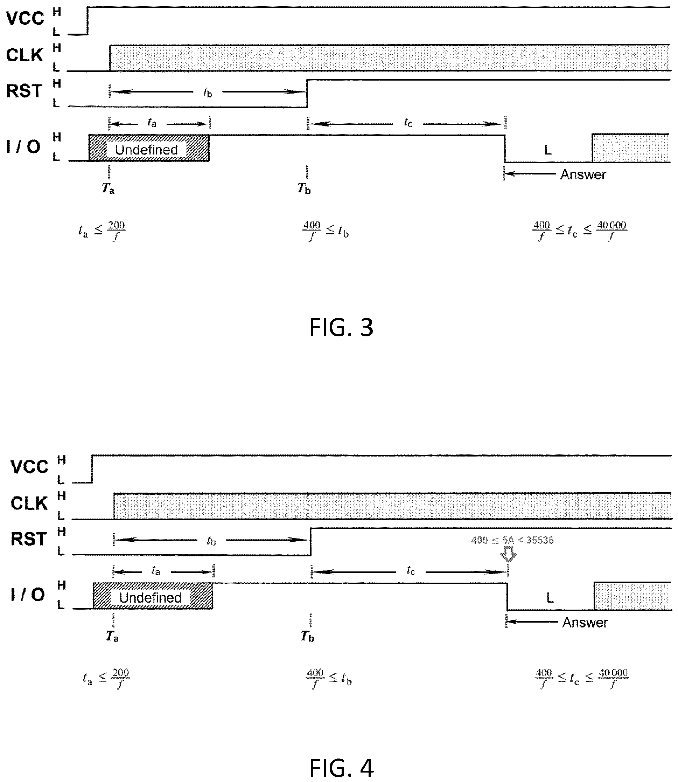

With reference to figure 3, the user reset sequence implemented by the controller 22 of the reader 2 comprises the follows steps, while the electric interface 20 of the reader 2 is connected to the electrical interface 10 of the ICC 1.

At the beginning of the user reset sequence, all digital signals carried by all the electric contacts of the reader 2 and of the ICC 1 are at in the low state.

The controller 22 causes a power signal carried by the power contact VCC to have a rising edge at a time referred to as "powering time". As explained before, a rising edge is a signal transition from the low state to the high state.

Then, the controller 22 causes a clock signal carried by the clock contact CLK to have a rising edge at a time Ta, referred to as "clock starting time Ta" hereinafter. Ta is after the powering time.

Then, the controller 22 causes an input/output signal carried by the input/output contact I/O to have a rising edge at a time which is subsequent to the clock starting time Ta and delayed from Ta by a delay $t_a$. The delay $t_a$ is lower or equal to 200/f, where f is a clock frequency used for communications between the reader 2 and the ICC 1. In other words, the delay $t_a$ has a duration lower or equal to 200 clock cycles and the input/output signal has to have a rising edge within 200 clock cycles (delay $t_a$) after the clock starting time Ta (at time Ta + $t_a$). The clock signal is provided by the reader 2 to the ICC 1 and consequently the clock cycle is controlled by the reader 2.

Then, the controller 22 causes a reset signal carried by the reset contact RST to have a rising edge at a time Tb, referred to as "reset time Tb" hereinafter. The reset time Tb is after the clock starting time Ta and delayed from Ta by a delay $t_b$. The delay $t_b$ between Ta and Tb is at least 400 clock cycles ($t_b$ is greater or equal to 400/f).

Then, the controller 22 causes the input/output signal to have a falling edge at a time subsequent to Tb, and delayed from Tb by a delay $t_c$. The delay $tc$ is included in a predefined range. Therefore, the time of the falling edge of the input/output signal is included in a predefined period after the reset time Tb, said predefined period having a duration equal to the duration of the predefined range.

When the reader 2 complies with the ISO7816-3 standard, the predefined range is as follows:

$$400/\text{f} \leq t_c \leq 40000/\text{f}$$

In that case, the predefined period goes from 400 clock cycles after the reset time Tb to 40000 clock cycles after the reset time Tb.

From this point on, the controller 22 waits for an answer from the ICC 1 via the input/output contact. In other words, the answer from the ICC 1 via the input/output contact shall begin between 400 and 40000 clock cycles (delay $t_c$) after the reset time Tb (at time Tb + $t_c$).

The controller 22 expects the answer to start within the predefined period mentioned above. In other words the reader 2 expects ICC 1 to cause the input / output signal to have a falling edge. Generally, the entity (e.g. ICC 1) that set the input / output signal to have a falling edge will be the entity that will be in transmission mode and will have the control to manage the input/output signal while the other entity (e.g. reader 2) will be in reception mode and will only have access read only on the input / output contact.

This user reset sequence complies with the requirements of the ISO 7816 standard.

Maintenance reset sequence

With reference to figure 4, the maintenance reset sequence implemented by the controller 22 of the reader 2 comprises the follows steps, while the electric contacts of the reader 2 are connected to the electrical contacts of the ICC 1.

At the beginning of the maintenance reset sequence, all digital signals carried by all the electric contacts of the reader 2 are at in the low state.

The controller 22 causes a power signal carried by the power contact VCC to have a rising edge at the powering time, like in the user reset sequence.

Then, the controller 22 causes a clock signed carried by the clock contact CLK to have a rising edge at the clock starting time Ta, like in the user reset sequence.

Then, the controller 22 causes an input/output signal carried by the input/output contact I/O to have a rising edge at a time which is subsequent to the clock enabling time Ta and delayed from Ta by a delay $t_a$, like in the user reset sequence.

Then, the controller 22 causes a reset signal carried by the reset contact RST to have a rising edge at the reset time Tb, like in the user reset sequence.

Then, the controller 22 causes the input/output signal to have a falling edge at a time subsequent to Tb, and delayed from Tb by a delay $t_c$. The delay $tc$ is included in the predefined range already discussed above.

Instead of waiting an answer from the ICC 1, the controller 22 causes a predefined word to be sent to the input/output contact within the predefined period after the reset time (Tb) already discussed above in relation with the user reset sequence.

As a reminder, when the reader 2 complies with the ISO7816-3 standard, this predefined period goes from 400 clock cycles after the reset time Tb to 40000 clock cycles after the reset time Tb.

The predefined word may be coded on a single byte. In that case, the predefined word is of the "char" type (character). A byte is the smallest piece of information which can be transferred from the reader 2 to the integrated card, when said devices complies with the ISO7816-3 standard.

The predefined word may have a hexadecimal value of A5.

For example, generating the '5A' character requires 12 ETU (for Elementary Time Unit, which is the nominal bit duration) including: 1 ETU to encode 1 start bit (state L), 8 ETU is required to encode one character ('5A' character), 1 ETU for parity bit, and 2 ETU for the guard time (state H). For example, one ETU is equal to 372 clock cycles. The duration to send the predefined word coded on a single byte is this example (e.g. character "5A") will be equal to 4464 clock cycles (12 ETU multiplied by 372 clock cycles).

In an embodiment, the predefined word starts to be sent by the reader 2 at the starting time of this predefined period, i.e. at 400 clock cycles after the reset time Tb.

In another embodiment, the predefined word is sent later than this starting time, as long as the transmission of the predefined word is over before or at the ending time of the predefined period (i.e. at 40000 clock cycles after the reset time Tb).

When the predefined word is coded on a single byte, the time to send the predefined word can be equal to 400 clock cycles $\pm$ T, where T is in clock cycles unit. The maximum value of T is 35536 and its minimum value is -400. In other word the predefined word shall be sent between 400 clock cycles and 35536 clock cycles after the reset time Tb. The time to send the predefined word is configurable, stored in the memory 12 of the reader 2 and may be configured during the personalization. The configuration of the time to send the predefined word is done by adjusting the value T which shall belong to the time interval of 400 clock cycles after the reset time Tb and 35536 clock cycles after the reset time Tb.

**Method performed by the ICC 1**

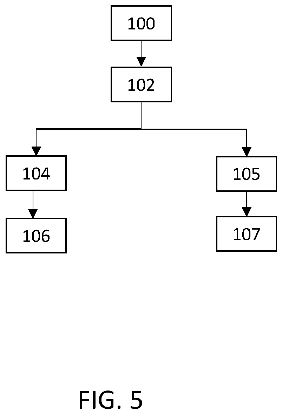

With reference to the figure 5 a method performed by the ICC 1 comprises the steps below.

In a step 100, the boot manager 16 detects a reset sequence implemented by the reader 2 while the reader 2 is connected to the ICC 1.

In practice, the reset sequence detected by the boot manager 16 may be the user reset sequence described above, the maintenance reset sequence described above, or another sequence.

Detecting the user reset sequence comprises detecting that the reader 2 has controlled the state of the digital signals carried by the electric contacts of the reader 2 as explained above in relation with figure 3. In particular, detecting the user reset sequence comprises detecting that the reader 2 has not sent the above discussed predefined word within the predefined period.

Detecting the maintenance reset sequence comprises detecting that the reader 2 has controlled the state of the digital signals carried by the electric contacts of the reader 2 as explained above in relation with figure 4. Moreover, detecting the maintenance reset sequence comprises detecting that the reader 2 has sent the predefined word within the predefined period. This implies that: i) the reader 2 must have sent a word within said predefined period and ii) said word must match in length and value with the predefined word.

The boot manager 16 may read the predefined word using a retry mechanism. In case of a mis-synchronization in the reader 2 or the card, there might be different timings between the reader 2 sending the predefined word and the card reading the input/output contact. The retry mechanism consists in watching the input/output line if there is a start bit that indicates a character has arrived. The number of retries can be stored in the memory 12 of the ICC 1, and may be configured during personalization. A smaller number for retries will decrease the time overhead dedicated to the detection of the predefined word. However, abigger number of retry will increase time overhead but reduce the risk of a missed detection of the predefined word.

In a step 102, the ICC 1 may send the first byte of ATR (for Answer To Reset) ISO7816-3, noted TS byte. The TS byte has a hexadecimal value of '3B' and indicates "state H encodes value 1 and moment 2 of character frame conveys the least significant bit (lsb first)" based on ISO7816-3 standard. The boot manager 16 may choose the TS byte to be sent before starting the user OS or the maintenance OS.

If the reset sequence detected by the boot manager 16 at step 100 is the user reset sequence, the boot manager 16 causes the ICC 1 to boot in the user mode. This implies that the user OS is selectively started (step 104).

In a step 106, the boot manager 16 may send to the reader 2 via the input/output contact data indicating that the ICC 1 has booted or is booting in the user mode. These data correspond to a user mode Answer To Reset (user mode ATR).

If the reset sequence detected by the boot manager 16 at step 100 is the maintenance reset sequence, the boot manager 16 causes the ICC 1 to boot in the maintenance mode. This implies that the maintenance OS is selectively started (step 105).

Moreover, the boot manager 16 may send to the reader 2 via the input/output contact data indicating that the ICC 1 has booted or is booting in the maintenance mode (107). These data correspond to a specific ATR that is different from the user mode ATR. It indicates to the reader 2 that the ICC 1 has booted or is booting in the maintenance mode.

The boot manager may detect at step 100 that the reader 2 has implemented a sequence different from the user reset sequence and from the maintenance reset sequence. In this case, steps 104, 105 are not performed. In other words, the boot managers ensures that neither the user OS nor the maintenance OS is booted.

## Maintenance mode

Once the ICC 1 has booted in the maintenance mode, the ICC 1 is response the set of maintenance commands only, the set of maintenance commands being more restricted than the set of user commands.

The maintenance commands may include an authentication command. When processing such an authentication command, the ICC 1 checks whether the reader 2 has the right to interact with the ICC 1 in the maintenance mode. Such a process outputs an authentication result indicated whether the authentication processed has succeeded or failed.

If the authentication result indicates that the authentication has failed, the ICC 1 may reset and/or switch into the user mode by starting the user OS.

If the authentication result indicates that the authentication has succeeded, the maintenance OS waits for further maintenance commands.

The maintenance commands may include status commands requesting various statuses of the ICC 1. The maintenance command may comprise four status commands requesting the following statuses, respectively.

A first status is a tearing event status comprising data describing tearing events detected by the ICC 1. Said data may include multiple tearing events (write, transaction, unitary recovery, trans recovery) associated with memory 12 addresses and occurrences.

A second status is a memory 12 leak event status comprising data describing memory 12 leaks in a memory 12 of the ICC 1. Said data may include a number of garbage collections performed, information on the deleted objects owner(s), on number of deleted objects for each owner.

A third status is a security status comprising data describing security violations detected by the ICC 1. Said data may report a number of occurrences of the following events: a security reset due to a high supply (VCC) violation, a security reset due to a high frequency violation, a security reset due to a low frequency violation. Said data may also provide the address and the number of occurrences of a memory 12 violation on erasing or on programming. Said data may also provide a number of stack overflows that occurred in the ICC 1.

A fourth status is a card endurance status comprising data describing a level of endurance of the memory 12 of the ICC 1. This data may report a number of consumed sectors.

The set of maintenance commands may consist of the authentication command and of at least one of the status commands described above.

## Claims

1. An integrated circuit card (1) comprising:

　　• an electrical interface (10) for communicating with a reader (2), wherein the electrical interface includes a reset contact (RST) and an input/output contact (I/O);
　　• a boot manager (16) configured to:

　　　　◦ detect a reset sequence implemented by the reader (2) while the reader (2) is connected to electrical interface (10),
　　　　◦ whenever the detected reset sequence is a user reset sequence, cause the integrated circuit card (1) to boot in a user mode wherein the integrated circuit card (1) is responsive to a set of user commands;

○ whenever the detected reset sequence is a maintenance reset sequence, cause the integrated circuit to boot in a maintenance mode wherein the integrated circuit card (1) is responsive to a set of maintenance commands only, the set of maintenance commands being more restricted than the set of user commands;

wherein the maintenance reset sequence comprises:

• causing a reset signal carried by the reset contact to have a rising edge at a reset time (Tb),
• sending a predefined word to the integrated circuit card (1) via the input/output contact within a predefined period after the reset time (Tb); and

wherein the user reset sequence does not comprise sending the predefined word, and comprises:

• causing the reset signal to have a rising edge at the reset time (Tb),
• causing a signal carried by the input/output contact to have a falling edge at a subsequent time included in the predefined period after the reset time (Tb), and
• waiting for an answer from the integrated circuit card (1) via the input/output contact after the subsequent time.

2. The integrated circuit card (1) of claim 1, wherein the predefined period goes from 400 clock cycles after the reset time (Tb) to 40000 clock cycles after the reset time (Tb).

3. The integrated circuit card (1) of any one of claims 1 and 2, wherein the predefined word is coded on a single byte and/or has a hexadecimal value of A5.

4. The integrated circuit card (1) of any one of claims 1 to 3, wherein:

• the electrical interface (10) comprises a clock contact (CLK), and
• the user reset sequence comprises causing a clock signal carried by the clock contact (CLK) to have a rising edge at a clock starting time (Ta) before the reset time (Tb).

5. The integrated circuit card (1) of claim 4, wherein a delay ($t_b$) from the clock starting time (Ta) to the reset time (Tb) is greater or equal to 400 clock cycles.

6. The integrated circuit card (1) of any one of claims 4 to 5, wherein the user reset sequence comprises causing an input/output signal carried by the input/output electric contact to have a rising edge at a time between the clock starting time (Ta) and the reset time (Tb).

7. The integrated circuit card (1) of claim 6, wherein a delay ($t_a$) from the clock starting time (Ta) to the time of the rising edge of the input/output signal is lower or equal to 200 clock cycles.

8. The integrated circuit card (1) of any one of claims 4 to 7, wherein:

• the electrical interface (10) includes a power contact (VCC) for supplying the integrated circuit card (1) with power, and
• the user reset sequence comprises causing a power signal carried by the power contact to have a rising edge before the clock starting time.

9. The integrated circuit card (1) of any one of claim 1 to 8, wherein:

• the set of maintenance commands do not comprise any command modifying contents of the integrated circuit card (1), and
• the set of user commands comprises at least one commands modifying contents of the integrated circuit card (1).

10. The integrated circuit card (1) of any one of claims 1 to 9, wherein the set of maintenance commands include commands requesting a status of the integrated circuit card (1), wherein the status comprises at least one of the following data:

• data describing tearing events detected by the integrated circuit card (1),
• data describing memory 12 leaks in a memory 12 of the integrated circuit card (1),
• data describing security violations detected by the integrated circuit card (1), and
• data describing a level of endurance of a memory 12 of the integrated circuit card (1).

11. The integrated circuit card (1) of any one of claims 1 to 10, wherein:

• booting in the user mode comprises starting a user operating system comprising code instructions for processing the set of user commands,
• booting in the maintenance mode comprises starting a maintenance operating system comprising code instructions for processing the set of maintenance commands, wherein the maintenance operating system is different from the user operating system.

**12.** A reader (2) comprising:

• an electrical interface (20) for communicating with an integrated circuit card (1), wherein the electrical interface (20) comprises a reset contact (RST) and an input/output contact (I/O);
• a controller (22) configured to implement:

∘ a user reset sequence causing the integrated circuit card (1) to boot in a user mode wherein the integrated circuit card (1) is responsive to a set of user commands, and
∘ a maintenance reset sequence causing the integrated circuit card (1) to boot in a maintenance mode wherein the integrated circuit card (1) is responsive to a set of maintenance commands only, wherein the set of maintenance commands is more restricted than the set of user commands;

wherein the maintenance reset sequence comprises:

• causing a reset signal carried by the reset contact to have a rising edge at a reset time (Tb),
• sending a predefined word to the integrated circuit card (1) via the input/output contact within a predefined period after the reset time (Tb); and

wherein the user reset sequence does not comprise sending the predefined word, and comprises:

• causing the reset signal to have a rising edge at the reset time (Tb),
• causing a signal carried by the input/output contact to have a falling edge at a subsequent time included in the predefined period after the reset time (Tb), and
• waiting for an answer from the integrated circuit card (1) via the input/output contact after the subsequent time.

**13.** The reader (2) of claim 12, wherein the predefined period goes from 400 clock cycles after the reset time to 40000 clock cycles after the reset time.

**14.** The reader (2) of any one of claims 12 to 13, wherein the predefined word is coded on a single byte and/or has a hexadecimal value of A5.

**15.** A method implemented by an integrated circuit card (1), the method comprising:

• detecting (100) a reset sequence implemented by a reader (2) while the reader (2) is connected to the integrated circuit card (1),
• whenever the detected reset sequence is a user reset sequence, causing the integrated circuit card (1) to boot (104) in a user mode wherein the integrated circuit card (1) is responsive to a set of user commands less restricted than a set of maintenance commands;
• whenever the detected reset sequence is a maintenance reset sequence, causing the integrated circuit card (1) to boot (105) in a maintenance mode wherein the integrated circuit card (1) is responsive to the set of maintenance commands only, wherein the set of maintenance commands is more restricted than the set of user commands,

wherein the maintenance reset sequence comprises:

• causing a reset signal carried by the reset contact to have a rising edge at a reset time (Tb),
• sending a predefined word to the integrated circuit card (1) via the input/output contact within a predefined period after the reset time (Tb); and

wherein the user reset sequence does not comprise sending the predefined word, and comprises:

• causing the reset signal to have a rising edge at the reset time (Tb),
• causing a signal carried by the input/output contact to have a falling edge at a subsequent time included in the predefined period after the reset time (Tb), and
• waiting for an answer from the integrated circuit card (1) via the input/output contact after the subsequent time.

EP 4 575 888 A1

FIG. 1

FIG. 2

10

FIG. 3

FIG. 4

FIG. 5

# EP 4 575 888 A1

| | Europäisches Patentamt<br>European Patent Office<br>Office européen des brevets | **EUROPEAN SEARCH REPORT** | **Application Number**<br>EP 23 30 7375 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EMVCO: "Book 1 - Application Independent ICC to Terminal Interface Requirements", EMV, EMVCO , vol. 4,3 ; Contact 30 November 2011 (2011-11-30), pages 1-189, XP061034461, Retrieved from the Internet: URL:https://www.emvco.com/wp-content/uploads/documents/EMV_v4.3_Book_1_ICC_to_Terminal_Interface_2012060705394541.pdf [retrieved on 2020-01-06] * pages 59-61 * * figure 7 * | 1-15 | INV.<br>G06K7/00<br>G06K19/07 |
| A | US 2007/095924 A1 (DEGAUQUE LAURENT [FR] ET AL) 3 May 2007 (2007-05-03) * figure 8 * * paragraphs [0242] - [0290] * | 1-15 | |

|  | TECHNICAL FIELDS SEARCHED (IPC) |
|---|---|
|  | G06K |

The present search report has been drawn up for all claims

| Place of search | Date of completion of the search | Examiner |
|---|---|---|
| Munich | 28 May 2024 | Grob, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13

## ANNEX TO THE EUROPEAN SEARCH REPORT
## ON EUROPEAN PATENT APPLICATION NO.

EP 23 30 7375

This annex lists the patent family members relating to the patent documents cited in the above-mentioned European search report.
The members are as contained in the European Patent Office EDP file on
The European Patent Office is in no way liable for these particulars which are merely given for the purpose of information.

28-05-2024

| Patent document cited in search report | Publication date | Patent family member(s) | | Publication date |
|---|---|---|---|---|
| US 2007095924 A1 | 03-05-2007 | CN | 101069195 A | 07-11-2007 |
| | | EP | 1706842 A1 | 04-10-2006 |
| | | FR | 2864297 A1 | 24-06-2005 |
| | | JP | 5322388 B2 | 23-10-2013 |
| | | JP | 5341964 B2 | 13-11-2013 |
| | | JP | 2007516526 A | 21-06-2007 |
| | | JP | 2012014717 A | 19-01-2012 |
| | | US | 2007095924 A1 | 03-05-2007 |
| | | WO | 2005066888 A1 | 21-07-2005 |

EPO FORM P0459

For more details about this annex : see Official Journal of the European Patent Office, No. 12/82